# EUROPÄISCHE PATENTSCHRIFT

(11) **EP 1 027 236 B1**
(45) Veröffentlichungstag und Bekanntmachung des Hinweises auf die Patenterteilung: **18.08.2004**
(21) Anmeldenummer: 99936325.2
(22) Anmeldetag: 27.05.1999
(51) Int. Cl.: B60S 1/24, B60S 1/16

(54) **ANTRIEB ZUR ERZEUGUNG EINER TRANSLATORISCHEN, PERIODISCHEN BEWEGUNG, INSBESONDERE ALS WISCHERMOTOR**
DRIVE MECHANISM FOR GENERATING A PERIODIC TRANSLATIONAL MOTION, ESPECIALLY A WIPER MOTOR
ELEMENT D'ENTRAINEMENT POUR PRODUIRE UN MOUVEMENT DE TRANSLATION PERIODIQUE, UTILISE NOTAMMENT COMME MOTEUR D'ESSUIE-GLACE

(30) Priorität: 08.06.1998 DE 19825528
(43) Veröffentlichungstag der Anmeldung: 16.08.2000
(73) Patentinhaber: ROBERT BOSCH GMBH, 70442 Stuttgart (DE)
(72) Erfinder: KNAUF, Richard, F-67480 Roppenheim (FR)
(86) Internationale Anmeldenummer: PCT/DE1999/001553
(87) Internationale Veröffentlichungsnummer: WO 1999/064276

(56) Entgegenhaltungen:
- EP-A- 0 361 449
- DE-A- 2 448 981
- DE-A- 19 814 135
- PATENT ABSTRACTS OF JAPAN vol. 1998, no. 14, 31. Dezember 1998 (1998-12-31) & JP 10 258707 A (DENSO CORP), 29. September 1998 (1998-09-29)

## Beschreibung

Die Erfindung betrifft einen Antrieb, der als Wischermotor bei einer Wischanlage, wie sie im Kraftfahrzeugbau zum Einsatz kommt, Anwendung findet.

Die Drehbewegung des Antriebs muß in eine eine translatorische Richtungskomponente enthaltende Bewegung umgesetzt werden, wobei dabei ein Hinund Herbewegen eines Bauteils, beispielsweise einer Gelenkstange, erfolgen soll.

### Stand der Technik

In heutigen Anlagen werden die Gelenkstangen von einer auf der Welle eines Motors befestigten Kurbel angetrieben. Die Kurbel weist hierzu einen Kugelzapfen auf, der zusammen mit der Kurbel auf einer Kreisbahn um die Drehachse des Motors umläuft. An diesem Kugelzapfen sind Gelenkstangen befestigt, die folglich mit dem Kugelzapfen zusammen umlaufen. Dabei erfährt das Ende der Gelenkstange neben einer Hin- und Herbewegung auch eine Auf- und Abbewegung, welche von dem Cosinus und dem Sinus des Drehwinkels abhängen.

Dadurch, daß die Gelenkstangen an ihrem Ende eine Drehbewegung ausführen, überstreichen die Gelenkstangen einen sehr großen Hüllbereich, was bei modernen Fahrzeugen häufig zu Platzproblemen führt. Unter dem Hüllbereich ist der Bereich zu verstehen, den die Gelenkstange von einer äußeren Position zur gegenüberliegenden äußeren Position beansprucht.

### Vorteile der Erfindung

Dank der Erfindung wird eine Bewegung mit einer translatorischen Richtungskomponente erzeugt, bei welcher die Auf- und Abbewegung, d.h. die Bewegungskomponente in senkrechter Richtung zur Translationsbewegung, verringert ist. Dadurch verkleinert sich der Hüllbereich beispielsweise von mit dem Antrieb verbundenen Gelenkstangen entscheidend.

Gemäß einer Weiterbildung ist der Parkwinkelversatz zwischen der Fahrerund der Beifahrerseite selbst dann vermieden, wenn in Parkstellung der Wischeranlage der motorseitige Anlenkpunkt der Gelenkstange außerhalb der Verbindungsgeraden der wischerkurbelseitigen Anlenkpunkte der Gelenkstange liegt.

### Zeichnung

In der Zeichnung ist ein Ausführungsbeispiel der Erfindung dargestellt. Es zeigt die
- Fig. 1: eine Ansicht auf die Abtriebsseite des Antriebs und die
- Fig. 2: einen Antrieb als Wischermotor einer Wischanlage mit Reihenantrieb und die
- Fig. 3: einen Schnitt entlang der Linie AA aus Fig. 1

### Ausführungsbeispiel

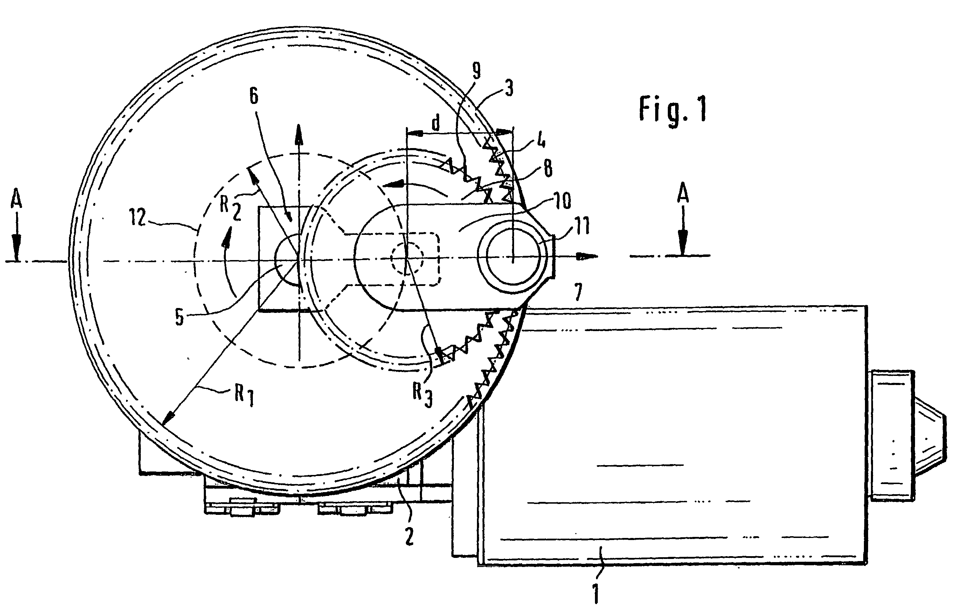

In Fig. 1 ist ein Antrieb zur Erzeugung einer translatorischen, periodischen Bewegung dargestellt. Ausgehend von einem Motor 1 mit einem angeflanschten Übersetzungsgetriebe 2 ist ein Getriebegehäuse 3 mit einer Innenverzahnung 4 vorgesehen. Im Inneren des Getriebegehäuses 3 befindet sich ein mit der Welle 5 mitdrehender Arm 6, an dessen freien Ende ein Bolzen 7 zur Lagerung eines Zahnrads 8 angeordnet ist. Das Zahnrad 8 kämmt mit seiner Außenverzahnung 9 in der Innenverzahnung 4 des Getriebegehäuses 3.

Auf dem Zahnrad 8 ist drehfest zu diesem ein Kugelzapfenträger 10 mit einem Kugelzapfen 11 angebracht. Der Kugelzapfen 11 ist derart auf dem Kugelzapfenträger 10 angeordnet, daß der Abstand d des Zentrums des Kugelzapfens zu der Drehachse des Zahnrads 8 genau dem halben Radius R1 der Innenverzahnung 4 entspricht, wobei die Drehachse des Zahnrads 8 auf einem Kreis 12 mit dem Radius R₂ angeordnet ist und die Außenverzahnung 9 des Zahnrads 8 einen Radius 3 aufweist. Die geometrische Beziehung ist die, daß die Radien R₂ und R₃ sowie der Abstand d genau die Hälfte des Radius R₁ betragen.

Der Bewegungsablauf ist wie folgt: Dreht sich die Welle 5 im Uhrzeigersinn, so wird der auf der Kurbel 6 auf dem Radius R₂ gelagerte Bolzen 7 ebenfalls im Uhrzeigersinn bewegt. Da das Zahnrad 8 an dem Bolzen 7 drehbar gelagert ist und mit seiner Außenverzahnung 9 in der Innenverzahnung 4 des Getriebegehäuses 3 kämmt, führt die Verschiebung der Drehachse des Zahnrads 8 zu einer Drehbewegung des Zahnrads 8 entgegen dem Uhrzeigersinn. Die Drehachse des Zahnrads 8 bewegt sich dabei in der Darstellung nach unten. Durch die Drehung des Zahnrads 8 erfolgt mit der Abwärtsbewegung der Drehachse in Richtung der negativen y-Achse auch eine Bewegung des Kugelzapfens zur Drehachse der Welle 5 hin, also in negativer Richtung der x-Achse. Diese Bewegung wird als Translationsbewegung bezeichnet. Die Achse des Kugelzapfens 11 bleibt in ihrer Lage bezüglich der y-Richtung aufgrund der gewählten geometrischen Verhältnisse unverändert.

Von dem Kugelzapfen 11 aus betrachtet, dreht sich das Zahnrad 8 entgegen dem Uhrzeigersinn im Abstand d um den Kugelzapfen 11. Nach einer Drehung der Welle 5 um einen Drehwinkel von 90° in Richtung des Uhrzeigersinns fällt das Zentrum des Kugelzapfens 11 mit der Drehachse der Welle 5 zusammen, der in Fig. 1 in einer Extremlage dargestellte Kugelzapfen 11 hat dann seine Mittellage eingenommen. Wird die Welle 5 um weitere 90° gedreht, so ergibt sich die gegenüberliegende extreme Position, die einem Drehwinkel von insgesamt 180° entspricht. Wesentlich bei dieser Bewegung ist, daß der Kugelzapfen 11 aufgrund der geometrischen Verhältnisse eine rein translatorische Bewegung erfährt.

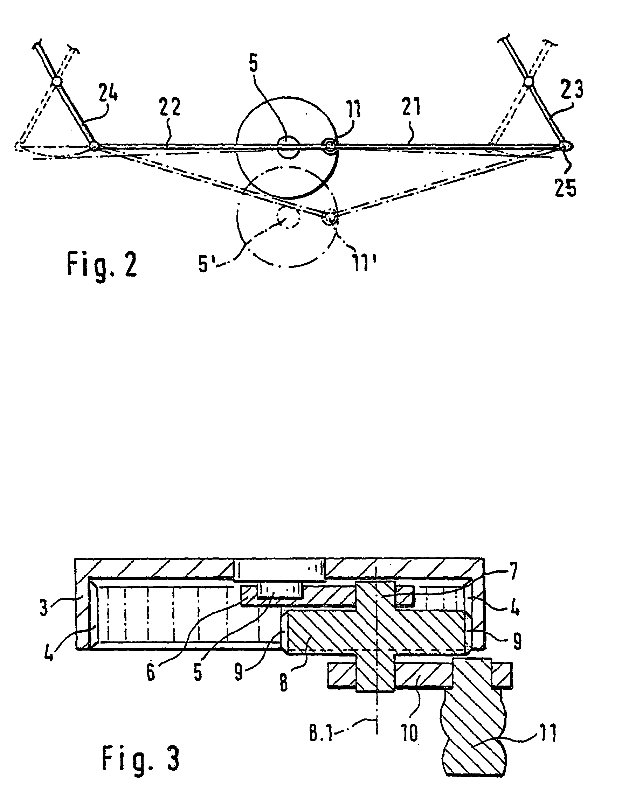

In Fig. 2 ist der Antrieb mit dem Kugelzapfen 11 in Verbindung mit zwei Gelenkstangen 21, 22 dargestellt, die wiederum mit drehbar gelagerten Wischerkurbeln 23, 24 verbunden sind. Durch die translatorische Bewegung des Kugelzapfens 11 und die Bewegung der Wischerkurbeln 23, 24 auf einer Kreisbahn um ihren Drehpunkt ergibt sich für die Gelenkstangen 21, 22 im Bereich ihrer Verbindung mit den Wischerkurbeln 23, 24 nach wie vor eine Auf- und Abbewegung, die sich jedoch in einer gegenüber herkömmlichen Antrieben viel engeren Hüllkurve befinden. Aufgrund der rein translatorischen Bewegung des Kugelzapfens 11 wird die Hüllkurve ausschließlich von der Auslenkung der Gelenke 25 zur Verbindung der Gelenkstangen 21, 22 mit den Wischerkurbeln 23, 24 bestimmt. Durch die Translationsbewegung des Kugelzapfens 11 ist selbst eine Anordnung des Antriebs in einem Abstand zu der Verbindungsgeraden der Wischerkurbelenden 25 möglich, ohne daß ein Parkwinkelversatz in der Ablage der Wischerblätter auftritt. Die Welle 5' des Antriebs kommt nun in einem Abstand zur Verbindungsgeraden der Wischerkurbelenden 25, wodurch sich auch die Lage des Kugelzapfens 11' verschiebt.

In Fig. 3 ist ein Schnitt durch das Gehäuse 3 des Antriebs gezeigt. In das Innere des Getriebegehäuses 3 ragt eine Welle 5, die auch als Vierkant ausgebildet sein kann und an der ein mitdrehender Arm 6 angeordnet ist. An dem freien Ende des Arms 6 ist ein Zahnrad 8 angeordnet, welches über einen Bolzen 7 in dem Arm 6 drehbar gelagert ist. Das Zahnrad 8 kämmt mit seiner Außenverzahnung 9 in der Innenverzahnung 4 des Getriebegehäuses 3.

Mit dem Zahnrad 8 drehfest verbunden ist ein Kugelzapfen 11, der auf dem Kugelzapfenträger 10 in einem radialen Abstand zu der Drehachse 8.1 des Zahnrads 8 angeordnet ist.

Im Gegensatz zu der Lagerung des Zahnrads 8 über den Bolzen 7 in dem Arm 6 ist der Kugelzapfenträger 10 drehfest mit dem Zahnrad 8 verbunden, dreht also mit diesem mit, wohingegen sich das Zahnrad 8 in dem Arm 6 dreht.

Die Lage der Bewegungsachse des Kugelzapfens 11 ist durch die Montagestellung des Zahnrads 8 und der Kurbel 6 vorgegeben.

Der Antrieb funktioniert folgendermaßen: Im Getriebegehäuse ist die Innenverzahnung 4 mit einem Teilkreisradius R₁ angebracht. Innerhalb dieser Innenverzahnung läuft das Zahnrad 8 auf einer Kreisbahn mit dem Radius R₂ um den Mittelpunkt der Innenverzahnung 4 und wird dabei von der Kurbel 6 geführt. Das Zahnrad 8 hat einen Teilkreisradius R₃ und kämmt mit seiner Außenverzahnung 9 in der Innenverzahnung 4. Der in einem Abstand d zur Drehachse des Zahnrads 8 angeordnete Kugelzapfen 11 wird durch die Drehung des Zahnrads 8 bewegt. Das Zahnrad 8 wird an zwei Stellen zwangsgeführt, zum einen in seiner Lagerung an der Kurbel 6 durch den Bolzen 7 und zum anderen durch den Eingriff seiner Außenverzahnung 9 in die Innenverzahnung 4 des feststehenden Gehäuses 3.

Für den Fall, daß der Teilkreisradius R1 doppelt so groß wie der Radius R₂ und der Radius R₃ und der Abstand d ist, führt der Kugelzapfen 11 eine geradlinige Bewegung mit der Amplitude 2 R₁ aus.

Wird der Abstand d der Kurbel vergrößert, z.B. um den überstrichenen Winkel der Wischerkurbeln zu vergrößern, führt der Kugelzapfen 11 eine elliptische Bewegung durch. Dabei ergibt sich als Länge der Hauptachse 2 · R₁ + (2 · (d-R₃)) und als Länge der Nebenachse 2 · (d-R₃). Auch hier wird also eine Bewegung mit einer translatorischen Richtungskomponente erzeugt.

## Patentansprüche

1. Antrieb für Bewegungen mit einer translatorischen, periodischen Richtungskomponente, insbesondere als Wischermotor, aufweisend eine Kurbel (6) und einen über die Kurbel (6) angetriebenen Kugelzapfen (11), **dadurch gekennzeichnet, daß** der Kugelzapfen (11) über einen Kugelzapfenträger (10) auf einem Zahnrad (8) mit einer Außenverzahnung (9) angeordnet ist, daß das Zahnrad (8) drehbar auf der Kurbel (6) gelagert ist, daß eine zur Drehachse der Kurbel (6) konzentrische Innenverzahnung (4) eines bezüglich der Kurbel (6) feststehenden Bauteils (3) vorgesehen ist und daß das Zahnrad (8) mit seiner Außenverzahnung (9) mit der Innenverzahnung (4) in Eingriff ist.

2. Antrieb nach Anspruch 1, **dadurch gekennzeichnet, daß** die Kurbel (6) das Zahnrad (8) auf einem Kreis mit dem Radius R₂ führt, daß die Außenverzahnung (9) des Zahnrads (8) einen Radius R₃ aufweist, daß ein Abstand d zwischen der Mitte des Kugelzapfens (11) und der Drehachse (8.1) des Zahnrads (8) vorhanden ist, wobei der Abstand d, der Radius R₂ und der Radius R₃ die Hälfte des Radius R₁ der Innenverzahnung (4) sind.

3. Antrieb nach Anspruch 1 oder 2, **dadurch gekennzeichnet, daß** an dem Kugelzapfen (11) mindestens eine Gelenkstange (21, 22) angebracht ist, welche mit einer Wischerkurbel (23, 24) in Verbindung steht, wobei die Wischerkurbel (23, 24) schwenkbar gelagert ist.

4. Antrieb nach Anspruch 3, **dadurch gekennzeichnet, daß** an dem Kugelzapfen zwei Gelenkstangen (21, 22) angebracht sind, die jeweils mit einer Wischerkurbel (23, 24) in Verbindung stehen.

5. Antrieb nach Anspruch 3 oder 4, **dadurch gekennzeichnet, daß** in Parkstellung der Wischeranlage der motorseitige Anlenkpunkt (11) der Gelenkstange (21, 22) außerhalb der Verbindungsgeraden der wischerkurbelseitigen Anlenkpunkte der Gelenkstange (21, 22) liegt.

## Claims

1. Drive for movement with a translational, periodic direction component, in particular in the form of a wiper motor, having a crank (6) and a ball pin (11) which is driven via the crank (6), **characterized in that** the ball pin (11) is arranged via a ball-pin carrier (10) on a toothed wheel (8) having an external toothing (9), **in that** the toothed wheel (8) is mounted rotatably on the crank (6), **in that** an internal toothing (4), which is concentric with the axis of rotation of the crank (6) and belongs to a component (3) which is fixed with respect to the crank (6), is provided, and **in that** the toothed wheel (8) is in engagement by means of its external toothing (9) with the internal toothing (4).

2. Drive according to Claim 1, **characterized in that** the crank (6) guides the toothed wheel (8) on a circle with the radius R₂, **in that** the external toothing (9) of the toothed wheel (8) has a radius R₃, and **in that** there is a distance d between the centre of the ball pin (11) and the axis of rotation (8.1) of the toothed wheel (8), the distance d, the radius R₂ and the radius R₃ being half of the radius R₁ of the internal toothing (4).

3. Drive according to Claim 1 or 2, **characterized in that** at least one articulated rod (21, 22) is attached to the ball pin (11) and is connected to a wiper crank (23, 24), the wiper crank (23, 24) being mounted pivotably.

4. Drive according to Claim 3, **characterized in that** two articulated rods (21, 22) are attached to the ball pin and are connected in each case to a wiper crank (23, 24).

5. Drive according to Claim 3 or 4, **characterized in that**, in the parking position of the wiper system, the motor-side coupling point (11) of the articulated rod (21, 22) lies outside the straight lines of connection of those coupling points of the articulated rod (21, 22) which are on the wiper-crank side.

## Revendications

1. Entraînement destiné à des mouvements comportant une composante périodique de direction de translation, en particulier en tant que moteur d'essuie-glace, comportant une manivelle (6) et un pivot sphérique (11) entraîné par la manivelle (6),
**caractérisé en ce que**
le pivot sphérique (11) est disposé par l'intermédiaire d'un support de pivot sphérique (10) sur une roue dentée (8) munie d'une denture extérieure (9), la roue dentée (8) est montée de façon à pouvoir tourner sur la manivelle (6), on prévoit une denture intérieure (4) - concentrique par rapport à l'axe de rotation de la manivelle (6) - d'un composant (3) fixe par rapport à la manivelle (6) et la roue dentée (8) est en prise avec la denture intérieure (4) par l'intermédiaire de sa denture extérieure (9).

2. Entraînement selon la revendication 1,
**caractérisé en ce que**
la manivelle (6) guide la roue dentée (8) sur un cercle dont le rayon est R₂, la denture extérieure (9) de la roue dentée (8) présente un rayon R₃, il existe un écart d entre le milieu du pivot sphérique (11) et l'axe de rotation (8.1) de la roue dentée (8), l'écart d, le rayon R₂ et le rayon R₃ représentant la moitié du rayon R₁ de la denture intérieure (4).

3. Entraînement selon la revendication 1 ou 2,
**caractérisé en ce que**
sur le pivot sphérique (11) s'applique au moins une bielle articulée (21, 22) qui est en liaison avec une manivelle d'essuie-glace (23, 24), la manivelle d'essuie-glace (23, 24) étant montée de façon à pouvoir pivoter.

4. Entraînement selon la revendication 3,
**caractérisé en ce que**
sur le pivot sphérique (11) s'appliquent deux bielles articulées (21, 22) qui sont chacune en liaison avec une manivelle d'essuie-glace (23, 24).

5. Entraînement selon la revendication 3 ou 4,
**caractérisé en ce que**
lorsque l'installation d'essuie-glaces est à l'arrêt fixe, le point d'articulation (11) côté moteur de la bielle articulée (21, 22) se trouve à l'extérieur des droites qui relient les points d'articulation côté manivelle de la bielle articulée (21, 22).
